Europäisches Patentamt

European Patent Office

Office européen des brevets

(19)

(11) Numéro de publication: **0 094 310**
**B1**

(12) # FASCICULE DE BREVET EUROPÉEN

(45) Date de publication du fascicule du brevet:
23.07.86

(51) Int. Cl.⁴: **B 65 G 49/06**

(21) Numéro de dépôt: **83400918.5**

(22) Date de dépôt: **06.05.83**

(54) **Dispositifs pour la constitution simultanée, avec taquage, de plusieurs piles de produits verriers plats.**

(30) Priorité: **10.05.82 FR 8208098**

(43) Date de publication de la demande:
**16.11.83 Bulletin 83/46**

(45) Mention de la délivrance du brevet:
**23.07.86 Bulletin 86/30**

(84) Etats contractants désignés:
**BE DE GB IT**

(56) Documents cité:
**DE-A-2 440 547**
**FR-A-1 438 399**
**FR-A-2 081 953**
**FR-A-2 134 091**

(73) Titulaire: **SOCIETE GENERALE POUR LES TECHNIQUES NOUVELLES S.G.N. Société anonyme dite:, 1, rue des Hérons Montigny- le- Bretonneux, F-78184 Saint- Quentin en Yvelines Cedex (FR)**

(72) Inventeur: **Gabillet, Maurice, 53, rue d'Aguesseau, F-92100 Boulogne- Billancourt (FR)**

(74) Mandataire: **Combe, André, CABINET BEAU DE LOMENIE 55 rue d'Amsterdam, F-75008 Paris (FR)**

EP 0 094 310 B1

LIBER, STOCKHOLM 1986

## Description

La présente invention concerne les dispositifs utilisables pour la constitution simultanée, avec taquage, de plusieurs piles de produits verriers plats.

Les produits verriers plats sont fabriqués à très grande cadence sous forme d'une bande continue. Cette bande est découpée en objets élémentaires qui sont mis en piles pour constituer des paquets homogènes.

Jusqu'à ce jour, les dispositifs connus de constitution de ces piles permettent de préparer des piles d'objets ayant des dimensions données et, lorsque les objets changent de dimensions, les caractéristiques de fonctionnement de ces dispositifs doivent être modifiées. Ainsi, on ne forme à un instant donné qu'une pile d'objets ayant des dimensions déterminées.

C'est ainsi que le FR-A-2 134 091 (figures 9 et 10) révèle un dispositif pour la constitution simultanée de deux ou plusieurs piles R1, R2,... de produits verriers plats S découpés, lesdits produits étant manipulés par un dispositif formé de paires de ventouses 17, chaque ventouse 17 étant munie d'un ergot 38 grâce auquel on peut, par action simultanée sur l'ensemble des ergots 38 des ventouses 17 soutenant un produit S, réaliser le largage dudit produit S, ledit largage effectué dans une position prédéterminée provoquant l'empilage dudit produit sur un produit similaire. Dans ce dispositif:

- le largage de produits successifs S est réalisé grâce à l'action de vérins SS commandés, sur des ensembles 40' agissant sur des ergots 38, lesdits ensembles 40' étant disposés longitudinalement par rapport au déplacement des produits, étant séparés l'un de l'autre (ou des autres),

- le largage de produits successifs S étant réalisé de façon que chaque produit S soit disposé sur une pile de produits correspondants préalablement déposés.

Or, il peut être utile de réaliser simultanément deux ou plusieurs piles d'objets plats de dimensions identiques ou différentes, c'est là l'objet de la presente invention.

La présente invention concerne donc un dispositif pour la constitution simultanée, avec taquage, de deux piles de produits verriers plats découpés, lesdits produits étant manipulés par un dispositif formé de paires de ventouses chaque ventouse étant munie d'un ergot grâce auquel on peut, par action sur l'ensemble des ergots des ventouses soutenant un produit, réaliser le largage dudit produit, ledit largage effectué dans une position prédéterminée provoquant l'empilage dudit produit sur un produit similaire avec taquage de la pile obtenue, ledit dispositif étant caractérisé en ce que:

- le largage de deux produits successifs est simultané,

- les ensembles provoquant le largage des produits sont constitués chacun de douilles portant des poussoirs et solidarisées entre elles, les douilles existantes en dehors de ces ensembles étant libres les unes par rapport aux autres et sans action, et la commande du largage étant effectuée au moyen d'un vérin solidaire desdits ensembles,

- le taquage des piles se fait en utilisant une butée aval pour le produit aval et une butée amont pour le produit amont, puis en faisant agir, après mise en place approximative desdits deux produits, une butée disposée entre ces deux produits et animée d'un mouvement de va-et-vient, réalisant ainsi un taquage longitudinal, puis on réalise un taquage latéral indépendant pour chaque pile de produits.

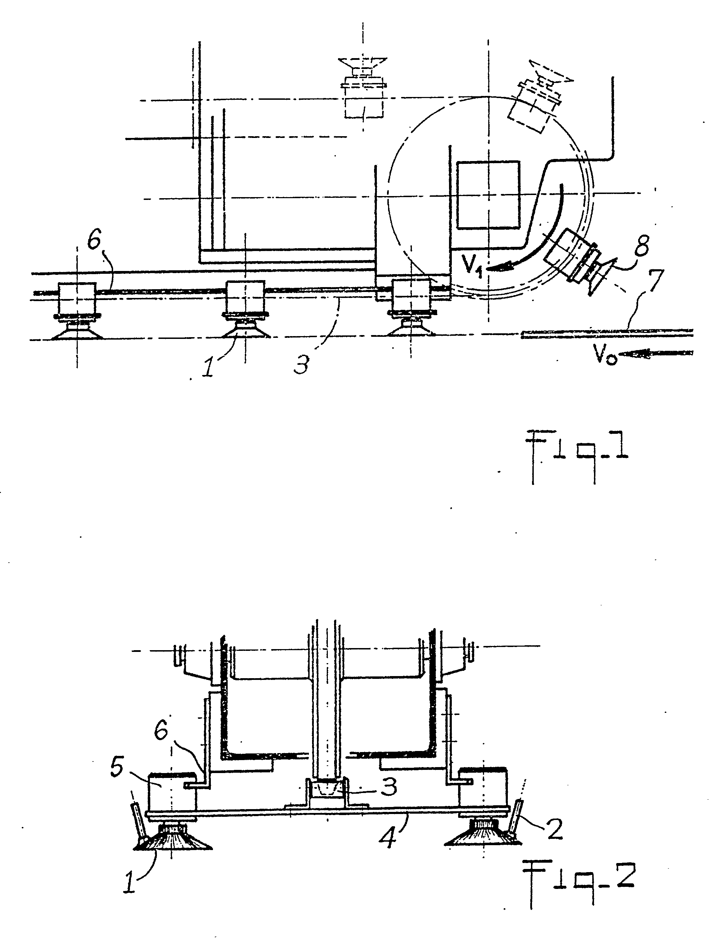

La présente invention s'applique dans le cadre d'un procédé de manutention d'objets plats en verre, avec utilisation de ventouses mécaniques, que l'on va décrire maintenant. Ledit procédé de manutention connu est illustré sur les figures 1, 2 et 3.

Les figures 1 et 2 illustrent le système de transport des feuilles de verre découpées; la figure 1 est une coupe en long d'une partie de ce système de transport et la figure 2 une coupe en travers dudit système.

Sur la figure 1, on a schématisé une double colonne de ventouses mécaniques 1 munies d'un ergot 2 fixées sur une chaîne sans fin 3, entraînée par une roue dentée repérée. La figure 2 montre le mode de liaison entre les ventouses 1 de chaque colonne et la chaîne 3. L'étrier 4 qui relie chaque couple de ventouses porte deux patins de glissement 5 qui coulissent dans des glissières 6. Le dispositif décrit assure une bonne planéité de la surface constituée par la face inférieure des ventouses au cours de leur déplacement; la feuille 7 est introduite à l'amont du convoyeur portant le dispositif à ventouses décrit plus haut, à une vitesse Vo égale à la vitesse $V_1$ du déplacement des ventouses et à un niveau tel que la face supérieure de la feuille 7 comprime légèrement les levres 8 des ventouses réalisant de cette façon le vide à l'intérieur de celles-ci.

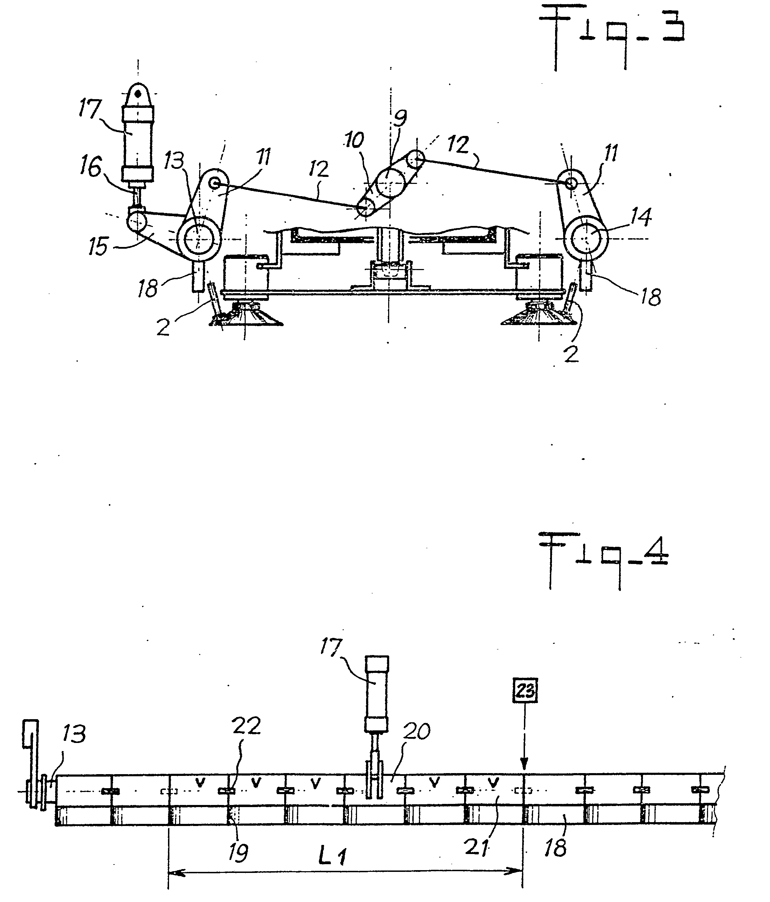

La figure 3 reprend les éléments de la figure 2, en les complétant par une coupe transversale du mécanisme de lâchage. On sait que, pour obtenir un lâcher correct d'une pièce et plus particulierement d'une plaque tenue "à plat", il est indispensable de libérer tous les points d'accrochage simultanément. Le dispositif proposé prend en compte cette exigence, aussi bien dans le sens longitudinal que transversal.

Transversalement un axe central 9 transmet par l'intermédiaire de biellettes 10 et 11 reliées par les bielles 12, le mouvement de rotation de l'axe primaire 13 au mouvement de rotation (en sens inverse) de l'axe tertiaire 14. En agissant sur la biellette 15 solidaire de l'axe 13 au moyen de la tige 16 du vérin 17 dans un sens ou dans l'autre on commande donc en définitive une rotation en sens inverse dans un sens ou dans l'autre des axes 13 et 14. Ces deux axes portent des poussoirs 18 qui viennent agir sur les ergots 2, provoquant la mise à l'air des ventouses gauche et droite simultanément. Les poussoirs 18 forment en fait une rampe longitudinale convenablement disposée.

En utilisant le procédé de manutention des feuilles de verre décrit ci-dessus on a réalisé, dans la présente invention un dispositif complémentaire qui permet la constitution simultanée et le taquage de deux piles de produits verriers plats de dimensions identiques ou différentes.

Le dispositif complémentaire selon l'invention se compose de deux moyens à savoir:

- un dispositif qui, lors de la manipulation des produits verriers plats selon le dispositif de la figure 3 permet la manipulation (préhension et plus particulièrement largage) d'objets de verres successifs de longueurs prédéterminées (identiques ou différentes) et le largage simultané de deux produits successifs:

- un dispositif qui, lorsque lesdits objets auront été largués en deux piles permettra le taquage de chacune des piles.

Le premier dispositif consiste à commander le largage des objets en verre au moyen d'une série de douilles dont chacune porte un poussoir douilles dont la longueur est sensiblement égale à l'entraxe entre des paires de ventouses servant au transport desdits objets, chaque douille pouvant être solidarisée ou désolidarisée avec la douille voisine de façon à recevoir ou non l'impulsion donnée à cette douille par le vérin qui commande ledit largage.

On conçoit ainsi que l'action dudit vérin pourra se manifester sur un certain nombre de douilles seulement (celles qui sont solidarisées les unes avec les autres) et ce nombre étant déterminable à volonté pourra libérer des objets de longueur prédéterminée. En faissat en sorte que le vérin agisse directement sur deux douilles motrices et qu'à chaque douille motrice soit solidarisée un nombre différent de douilles on pourra larguer deux objets (plaques) voisins de longueurs différentes.

Le deuxième dispositif consiste en ce que, pour un ensemble de deux objets dont les longueurs sont différentes, on dispose chaque objet sur la pile correspondante en l'amenant sensiblement pour l'un en butée aval et pour l'autre en butée amont qu'on taque chacun des objets contre lesdites butées à l'aide d'une butée disposée entre lesdits objets et animée d'un mouvement de va-et-vient et qu'on réalise ensuite par des moyens connus le taquage transversal des objets.

Les deux dispositifs sont illustrés schématiquement sur les figures 4, 5 et 6.

La figure 4 est une vue longitudinale du dispositif selon l'invention de largage des objets.

Les figures 5 et 6 représentent le dispositif de taquage des deux piles; la figure 5 est une vue en long et la figure 6 est une vue de dessus suivant un plan horizontal.

Sur la figure 4 qui est une vue partielle mais longitudinale du dispositif selon l'invention dérivé du dispositif représenté sur la figure 3 on représente:

- en 17 le vérin,
- en 18, les poussoirs,
- en 13, l'axe;

mais le dispositif selon l'invention comporte;

- des douilles 20-21 verrouillables 22 entre elles et qui entraînent les poussoirs 18.

L'agencement et le fonctionnement de ce dispositif peuvent être décrits comme suit:

En fait la tige du vérin 17 n'agit pas directement sur l'axe 13, mais sur une douille spéciale 20 qui l'entoure (figure 4); à droite et à gauche de cette douille motrice 20, d'autres douilles 21 dont la longeur est égale à l'entraxe des paires de ventouses sont enfilées sur l'axe 13; elles portent toutes un poussoir 18 tel que défini plus haut. Des verrous 22 permettent de solidariser ou désolidariser de proche en proche les douilles, donc les poussoirs à la douille motrice 20.

Les poussoirs 18 forment ainsi une rampe de longueur déterminée.

En fait l'axe 13 porte deux douilles motrices 20 et 20 bis, judicieusement disposées le long de l'axe de façon à pouvoir rendre solidaires de ces deux douilles motrices, côté amont et aval de celles-ci le nombre de douilles correspondant aux longueurs respectives des deux feuilles que l'on veut empiler l'une derrière l'autre ceci tout en laissant entre elles un jeu suffisant; ce jeu correspond aux douilles "libres".

L'opération de lâchage se déroule alors de la façon suivante:

Lorsque le front avant de la feuille de longueur $L_1$ arrive au point 23 on commande la sortie de tige 16; les douilles repères V et la douille motrice tournent autour de leur axe orientant de ce fait les poussoirs 18 correspondants vers l'intérieur; les ergots des ventouses qui se trouvent face à ces poussoirs - ces ventouses supportent la feuille - sont eux-mêmes poussés vers l'intérieur relevant la lèvre des ventouses avec une simultanéité complète et la feuille tombe "à plat".

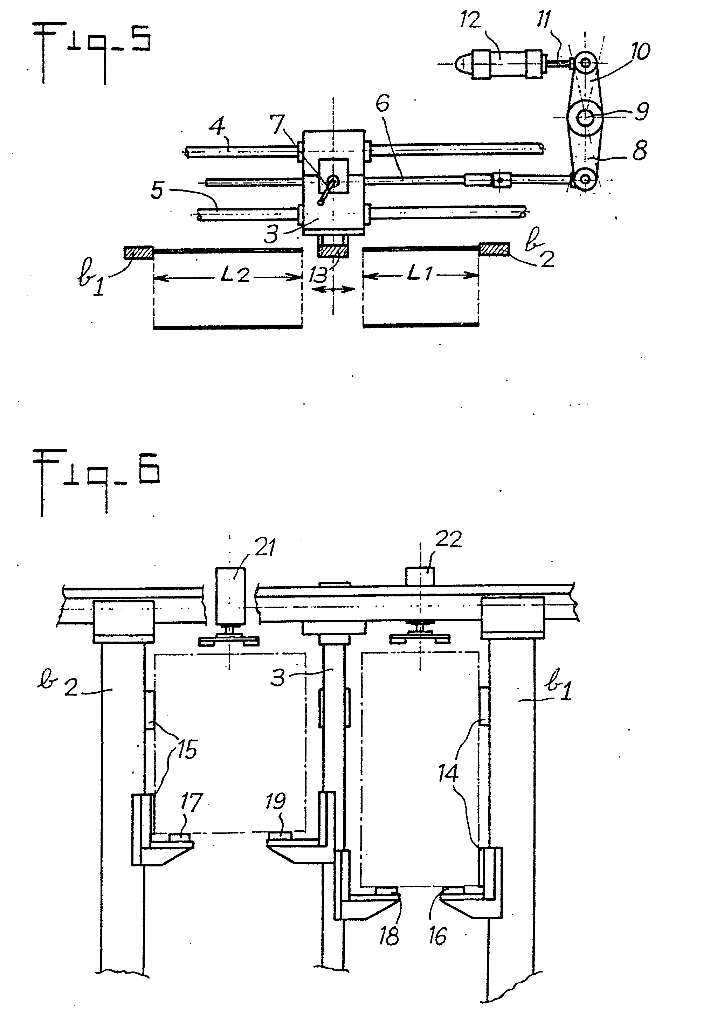

Le deuxième moyen selon l'invention qui n'est utilisable que si le transporteur d'objets transporte successivement deux objets distincts séparés de dimensions différentes est illustré sur les figures 5 et 6.

Les emplacements prévus pour l'empilage des feuilles de longueur $L_1$ et $L_2$ sont représentés sur la figure 5. Les barres de butées déplaçables $b_1$ et $b_2$ sont respectivement positionnées sur le front avant de la pile $L_1$ et sur le front arrière de la pile $L_2$, le jeu entre les deux piles étant choisi en fonction de la longueur des douilles et de la course du chariot mobile 3 dont on décrit ci-après le fonctionnement. Le chariot mobile 3 peut coulisser le long de l'équipement d'empilage sur deux glissières 4 et 5. Un axe 6 peut être rendu solidaire de ce chariot par un verrouillage 7; cet axe peut être astreint à un mouvement de va-et-vient rapide par l'intermédiaire d'une biellette 8 pivotant autour de l'axe 9 et relié par l'autre de ses extrémités 10 à la tige 11 d'un verin double effet 12.

La butée 13 du chariot mobile étant amenée à égale distance des fronts amont de la pile aval et du front aval de la pile amont on bloque le verrou 7 du chariot. A chaque chute de feuille $L_1$ ou $L_2$ on commande le va-et-vient du chariot soit vers l'aval

(L$_1$) soit vers l'amont (L$_2$). Le taqùage longitudinal des deux piles en cours de constitution est ainsi réalisé sur les butées 14 pour la pile aval et sur les butées 15 pour la pile amont.

Transversalement les barres de butées déplaçables b$_1$ et b$_2$ et le chariot mobile 3 portent des butées également déplaçables 16, 17, 18 et 19. Elles sont respectivement positionnées en fonction des largeurs des feuilles L$_1$ et L$_2$. Symétriquement à ces butées, deux butées latérales mobiles 21 et 22 sont fixées sur la charpente de l'équipement d'empilage; lorsque le taquage frontal des piles L$_1$ et L$_2$ est fait, on commande l'action des vérins qui portent les butées 21 et 22 réalisant ainsi le taquage latéral des piles L$_1$ et L$_2$. Bien entendu, on réalise cette double opération de taquage à chaque dépose de feuille.

Il est entendu par ailleurs que, d'une façon connue la table d'empilage sur laquelle reposent les piles de produits en feuille en cours de constitution comporte un mécanisme de descente en pas à pas de façon à maintenir la face supérieure des piles à un niveau constant pendant toute la durée de leur réalisation. La chute des feuilles en général fragiles est ainsi de hauteur limitée et constante; le taquage s'effectue de plus toujours dans le même plan et agit sur les feuilles supérieures des piles.

## Revendication

1. Dispositif pour la constitution simultanée, avec taquage, de deux piles de produits verriers plats découpés, lesdits produits étant manipulés par un dispositif formé de paires de ventouses (1), chaque ventouse étant munie d'un ergot (2) grâce auquel on peut, par action sur l'ensemble des ergots des ventouses, soutenant un produit, réaliser le largage dudit produit, ledit largage effectué dans une position prédéterminée provoquant l'empilage dudit produit sur un produit similaire avec taquage de la pile obtenue, ledit dispositif étant caractérisé en ce que:
- le largage de deux produits successifs est simultané,
- les ensembles (20, 21) provoquant le largage des produits sont chacun constitués de douilles portant des poussoirs (18) et solidarisées entre elles, les douilles existantes en dehors de ces ensembles étant libres les unes par rapport aux autres et sans action, et la commande du largage étant effectuée au moyen d'un vérin (17) solidaire desdits ensembles (20, 21),
- le taquage des piles se fait en utilisant une butée aval pour le produit aval et une butée amont pour le produit amont, puis en faisant agir, après mise en place approximative desdits deux produits, une butée disposée entre ces deux produits et animée d'un mouvement de va-et-vient, réalisant ainsi un taquage longitudinal, puis on réalise un taquage latéral indépendant pour chaque pile de produits.

## Patentanspruch

1. Vorrichtung zur gleichzeitigen und mit einem Rütteln erfolgenden Bildung von zwei Stapeln von beschnittenen flachen Glasprodukten, wobei die Produkte durch eine aus zwei Paaren von Saugnäpfen (1) bestehende Vorrichtung gehandhabt werden, wobei jeder Saugnapf mit einem Vorsprung (2) versehen ist, durch den man durch Einwirkung auf die Anordnung von Vorsprüngen der ein Produkt haltenden Saugnäpfe die Abgabe des Produkts bewirken kann, wobei die Abgabe in einer gegebenen Position erfolgt, die die Stapelung des Produkts auf einem ähnlichen Produkt mit Rütteln des erhaltenen Stapels bewirkt, wobei die Vorrichtung dadurch <u>gekennzeichnet</u> ist,

daß die Abgabe von zwei aufeinanderfolgenden Produkten gleichzeitig erfolgt,

daß die die Abgabe der Produkte bewirkenden Anordnungen (20, 21) jeweils aus Hülsen bestehen, die Drücker (18) tragen und miteinander fest verbunden sind, wobei die außerhalb dieser Anordnungen befindlichen Hülsen gegeneinander frei und ohne Wirkung sind und wobei die Steuerung der Abgabe durch einen mit den Anordnungen (20, 21) fest verbundenen Stellzylinder (17) erfolgt, und daß das Rütteln der Stapel erfolgt: durch Verwendung eines in Bewegungsrichtung abwärts gelegenen Anschlags für das in Bewegungsrichtung abwärts gelegene Produkt und eines in Bewegungsrichtung aufwärts gelegenen Anschlags für das in Bewegungsrichtung aufwärtsgelegene Produkt, und anschließend durch eine nach dem ungefähren Plazieren der beiden Produkte erfolgenden Einwirkung eines Anschlags, der zwischen diesen beiden Produkten angeordnet ist und hin- und herbewegt wird, wodurch ein längsgerichtetes Rütteln erfolgt, wonach ein unabhängiges seitliches Rütteln für jedes Stapel von Produkten erfolgt.

## Claim

1. Device for the simultaneous constitution, with alignment, of two stacks of flat cut glassware products, said products being handled by a device constituted by pairs of suction members (1), each suction member being provided with a pin (2) with which it is possible, by actuating the assemly of pins of the suction members supporting a product, to release said product, said releasing action being achieved in a predetermined position causing the stacking of said product on a similar product with alignment of the resulting stack, said device being characterized in that:
- the release of two successive products is simultaneous,
- the assemblies (20, 21) causing the release of the products are each constituted by sockets carrying push members (18), said sockets being interconnected, the existing sockets which are not part of said assemblies being independent one from the other and effectless, and control of the release being achieved by means of a jack (17) integral with said assemblies (20, 21),

   - the alignment of the stacks is achieved by using a downstream stop member for the downstream product and an upstream stop member for the upstream product, then actuating, after approximate positioning of said two products, a stop member placed between said two products and imparted with a reciprocating movement, thus producing a longitudinal alignment, then achieving an independent lateral alignment for each stack of products.

Fig. 1

Fig. 2

Fig-3

Fig-4

Fig. 5

Fig. 6

5